# EUROPEAN PATENT SPECIFICATION

(11) **EP 2 806 729 B1**
(45) Date of publication and mention of the grant of the patent: **28.09.2016**
(21) Application number: 12809296.2
(22) Date of filing: 19.11.2012
(51) Int. Cl.: A01G 25/14

(54) **GARDEN WATER SUPPLYING APPARATUS**
WASSERVERSORGUNGSVORRICHTUNG FÜR EINEN GARTEN
APPAREIL D'ALIMENTATION EN EAU D'ARROSAGE

(30) Priority: 26.01.2012 GB 201201449
(43) Date of publication of application: 03.12.2014
(73) Proprietor: SA EXEL Industries, 51200 Epernay (FR)
(72) Inventor: O'TOOLE, John Francis, Smethwick B66 4AW (GB); WALTERS, George Leigh, Nottingham NG10 4JL (GB); IACIOFANO, Nicolino, High Wycombe Buckinghamshire HP13 6QS (GB)
(74) Representative: Faulkner, Thomas John
(86) International application number: PCT/GB2012/000846
(87) International publication number: WO 2013/110908

(56) References cited:
- GB-A- 2 028 964
- US-A- 6 021 818
- US-B1- 6 568 610

## Description

This invention relates to garden water supplying apparatus which includes garden watering apparatus and garden aquatics apparatus. Garden watering apparatus includes amongst other things hoses, hose reels, hose guns, and watering lances. Garden aquatics apparatus includes pond pump and filtering systems and their connecting hoses.

Such apparatus include tube like and/or hose like portions for supplying water. Tube like portions tend to lead to systems which are positionable but rigid. Hose like portions tend to lead to systems which are flexible but not positionable without separate retention means.

It would be usefully to provide water supplying apparatus which are easily positionable for a certain use and may then be left unattended during their water supplying operation.

Watering lances can be used as a specific example. Garden watering lances when connected to an appropriate feeder hose can be used for watering plants or washing items or surfaces.

A garden watering lance typically has a handle or inlet portion, a head or outlet portion and a tube like portion therebetween so that there is a spacing between the head and the handle. This can be useful in providing additional reach for the user and may also help the user to be further way from the outlet of the water to avoid becoming wet or dirty.

Whilst existing watering lances can be useful, there are a limited number of circumstances in which they can be used. Some existing watering lances will include a pivoting head that can pivot relative to the tube like portion to enable the head (that is the outlet) to be directed in different directions relative to the tube-like portion. This can assist, for example, in situations such as watering a hanging basket above the user's head.

However it would be desirable for watering lances to be more versatile and therefore usable in a greater number of different situations. For example sometimes it is useful to be able to leave a hose and its outlet in a watering position unattended whilst performing other tasks. This is rarely practical with existing watering lances.

Thus it would be desirable to provide more versatile garden water supplying apparatus which is made using cost effective and functionally effective materials.

US 6,568,610 describes a flexible lawn and garden spray wand which has a flexible tube assembly and a bendable metal rod which extends through the tube assembly. Thus the flexible tube assembly can be bent into a desired shape.

According to a first aspect of the present invention there is provided a bendable bend retaining garden water supplying hose portion as claimed in claim 1.

This can allow the hose portion to be put in an operative position and left whilst carrying water. The bendable bend retaining hose portion might for example be wrapped around a post, branch, pole or similar.

The expression plastically deformable is used here in the sense that the member holds its shape after deformation as opposed to resiliently returning to its original shape.

With such a structure the length of hose can have the function of carrying water from the inlet end to the outlet end and the holding member can have the function of holding the length of hose and hence the whole bendable hose portion in a desired position.

The mounting may be such as to allow relative axial movement between the length of hose and the holding member.

The plastically deformable holding member may be mounted at each end to the length of hose. Each end of the plastically deformable holding member may be mounted in the length of hose against rotation relative to the length of hose. One end of the holding member may be mounted against axial movement relative to the length of hose. Another end of the holding member may be mounted so as to allow axial movement relative to the length of hose.

At least one end of the holding member may comprise at least one respective retaining feature for reception in the mounting portion.

The holding member may have at least one bend in the region of the mounting member to create two portions which are located in the holding member engaging portion of the mounting portion to resist relative rotation of the holding member relative to the mounting portion at the mounting portion.

The holding member may have a hook shaped portion at one end. The hooked shaped portion may be, at least partially, located in the mounting portion.

The holding member may have a simple bend at one end. The simple bend may be located in the mounting portion.

The mounting portion may be arranged to be fed on one end of the holding member and slid along the holding member for engagement at the other end.

The holding member engaging portion of the mounting portion may have at least two parts which are fixed together around the holding member. The two parts may be sonic welded together.

The holding member engaging portion of the mounting portion may be axially moveable relative to the hose engaging portion of the mounting portion whilst held against rotation relative to the hose engaging portion. This can help accommodate the effect of different bend radiuses of the length of hose and holding member to help improve performance of the bendable bend retaining hose portion in use.

The mounting portion may be arranged for insertion in an end of the length of hose.

The hose engaging portion of the mounting portion may be barbed.

There may be a pair of holding member mounting portions. One may be provided at a first end of the length of hose and another at a second end of the length of hose. Both mounting portions may be arranged to resist relative rotation of the holding member relative to the length of hose. One of the mounting portions may be arranged to resist axial movement of one end of the holding member relative to the length of hose and the other mounting portion may be arranged to allow axial movement of the other end of the holding member relative to the length of hose.

A first of the mounting portions may be arranged to be fed on one end of the holding member and slid along the holding member for engagement at the other end and a second of the mounting portions may have at least two parts which are fixed together around the holding member.

The bendable bend retaining hose portion may comprise a spacer member provided between the plastically deformable holding member and the length of hose.

The spacer member may be tube shaped and surround the plastically deformable holding member and may comprise a second length of hose.

The spacer member can help avoid undesirable kinking of the length of hose by limiting the minimum bend radius. Similarly this may help protect the plastically deformable holding member from fatigue.

The plastically deformable holding member may comprise a wire. Typically the wire will be metallic, and may, for example, be of mild steel.

The mounting portions may be of plastics material. The arrangement of the mounting portions and holding member can be such as to resist relative rotation therebetween without the need for any bond or weld between the mounting portions and the holding member. This can facilitate the use of differing materials for the holding member and the mounting portions.

The inlet and outlet ends of the hose portion may be provided with adaptors for connection to other parts, in particular parts of a garden water supplying apparatus. The adaptors may be arranged for connection to an inlet portion and an outlet portion. The adaptors may comprise the mounting portions. The adaptors may comprise connection means (such as a threaded sleeve) and/or sealing means (such as an o-ring).

According to a second aspect of the present invention there is provided a garden water supplying apparatus comprising an inlet portion, an outlet portion and in between the inlet portion and the outlet portion, a bendable bend retaining hose portion as defined above.

At least one of the inlet portion and the outlet portion may have an abutting portion for abutting with a portion of the holding member to help keep the holding member engaged with the respective mounting portion.

The inlet portion may comprise a handle portion. The inlet portion may have a connector for connecting to a feeder hose. The inlet portion may have a trigger for controlling flow of water through the apparatus, particularly through the bendable bend retaining hose portion.

The outlet portion may comprise a feature head. The feature head may comprise a plurality of individually selectable feature outlets.

The outlet portion may have a sprinkler outlet. In such a case, the bendable bend retaining hose portion may be bent into a configuration which allows the apparatus to be used as a lawn sprinkler.

In other cases the inlet portion may, for example, be a hose pipe carrying an adaptor, and the outlet portion may, for example, be a hose gun, or another length of hose carrying an adaptor in such cases the hose gun, adaptor or so on may be arranged to connect with the respective end of the hose portion.

In yet other cases the inlet portion and/or outlet portion may, for example comprise part of a garden aquatics system, and thus might comprise, for example, a pond pump, a pond filter, or a length of pond system hose carrying an adaptor. Again in such cases the pond filter, pond pump, adaptor and so on may be arranged to connect with the respective end of the hose portion.

Not all of the optional features of the first aspect of the invention are repeated here for the sake of brevity, however, it will be appreciated that these features may also be optional of features of the other aspects of the invention mentioned above.

According to a third aspect of the present invention there is provided a method of making a hose portion as claimed in claim 16.

The step of fixing the two parts may comprise sonic welding.

The method may comprise the step of introducing a spacer member into the length of hose, this may be done before the mounting portions are engaged at each end of the length of hose.

The method may comprise the step of introducing at least one respective retaining feature at at least the second end of the holding member before feeding the holding member through the mounting members. At least one respective retaining feature may be introduced into each end of the holding member before feeding the holding member through the mounting members.

At least one retaining feature may be introduced by bending the holding member.

One retaining feature may be a simple bend, another may be a hook shaped portion.

Embodiments of the present invention will now be described by way of example only, with reference to the accompanying drawings in which:
Figure 1 schematically shows a watering lance;
Figure 2 shows the watering lance of Figure 1 with a head portion and handle portion disconnected from an intermediate bendable bend retaining hose portion;
Figure 3 is a sectional view of the bendable bend retaining hose portion of the watering lance shown in Figures 1 and Figures 2;
Figure 4 shows an exploded view of the bendable bend retaining hose portion shown in Figure 3;
Figures 5A and 5B are sectional views showing, in more detail, the connections between the bendable bend retaining hose portion on the one hand and the head portion and the handle portion on the other hand;
Figures 6A and 6B show a modified form of mounting portion which may be used in an alternative version of the watering lance of Figures 1 to 5A and 5B. Figure 6A shows the mounting portion fitted on the end of a length of hose and Figure 6B shows the mounting portion in isolation; and
Figures 7A and 7B show a modified form of second mounting portion which may be used in an alternative version of the watering lance of Figures 1 to 5A and 5B, or similar products. Figure 7A shows the modified second mounting portion mounted on the end of a bendable hose portion and Figure 7B shows the modified second mounting portion in situ in a head to which the hose portion is connected.

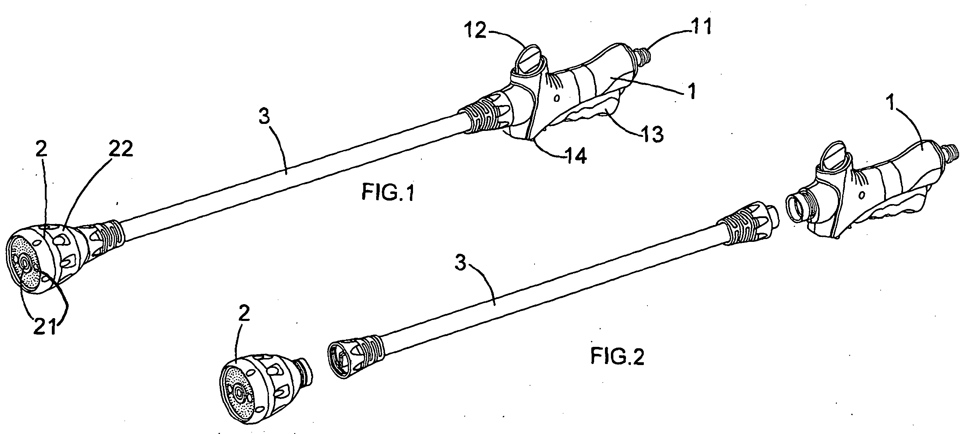

Figure 1 schematically shows a garden watering lance which generally comprises a handle or inlet portion 1, a head or outlet portion 2 and connected between these two a bendable bend retaining hose portion 3.

The handle portion 1 comprises a connector 11 for connecting to a feeder hose, a flow control mechanism 12 for providing an overall control of the rate of flow of water through the lance and a trigger portion 13 allowing the user to control the flow rate through the lance between off and the maximum set by the flow control mechanism 12. The handle portion 1 further comprises a lock mechanism 14 for locking the trigger 13 in an on position.

The head 2 is a multi feature head in the present embodiment and thus has a plurality of independently selectable outlets 21. In the present embodiment one of these is a rose outlet and another is a sprinkler outlet and there may be further outlets providing different watering effects. These different outlets 21 may be selected by the user rotating a sleeve 22 of the head relative to the remainder of the head 2.

The bendable bend retaining hose portion 3 is connected between the handle 1 and the head 2 and has the primary function of carrying water from the handle 1 to the head 2. To this degree the hose portion 3 acts like the tube portion which will be included in a conventional watering lance.

However in the present watering lance, as mentioned above, the hose portion is a bendable bend retaining hose portion 3 which means the head 2 may be moved relative to the handle 1 by bending of the hose portion 3. Thus, for example, the hose portion 3 may be wrapped around a branch, post, or pole in order to hold the watering lance in position. Similarly the bendable bend retaining hose portion 3 of the lance may be simply bent to allow the head 2 to be directed in a desired direction so that water leaving the outlets 21 proceeds in a desired direction.

Further, the bendable bend retaining hose portion 3 may be bent into a coil like configuration where the handle 1 and parts of the coil of the hose portion 3 rest on the ground and the head 2 projects upwardly such that it may act as a lawn sprinkler.

The lock mechanism 14 provided on the handle portion may then be used to lock the trigger 13 in an on position such that the lance may be left unattended whilst in one of these chosen watering positions.

Note that, whilst in the present embodiment the bendable bend retaining hose portion 3 is directly connected between the handle 1 and head 2, in other situations a rigid tube portion might be introduced for example between the handle portion 1 and the hose portion 3. This would mean that the lance had a longer overall length (assuming the hose portion 3 has the same length) with a portion of the connection between the handle 1 and head 2 being rigid and a portion being bendable.

Figure 2 shows the hose portion 3 disconnected from the handle 1 and head 2. In the present embodiment the hose portion 3 is a screw fit with both the handle portion 1 and the head portion 2.

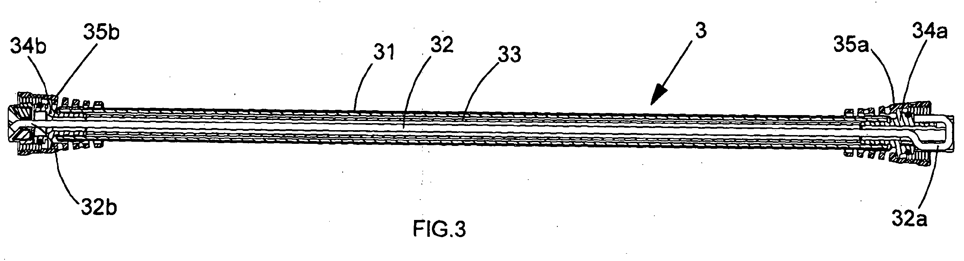

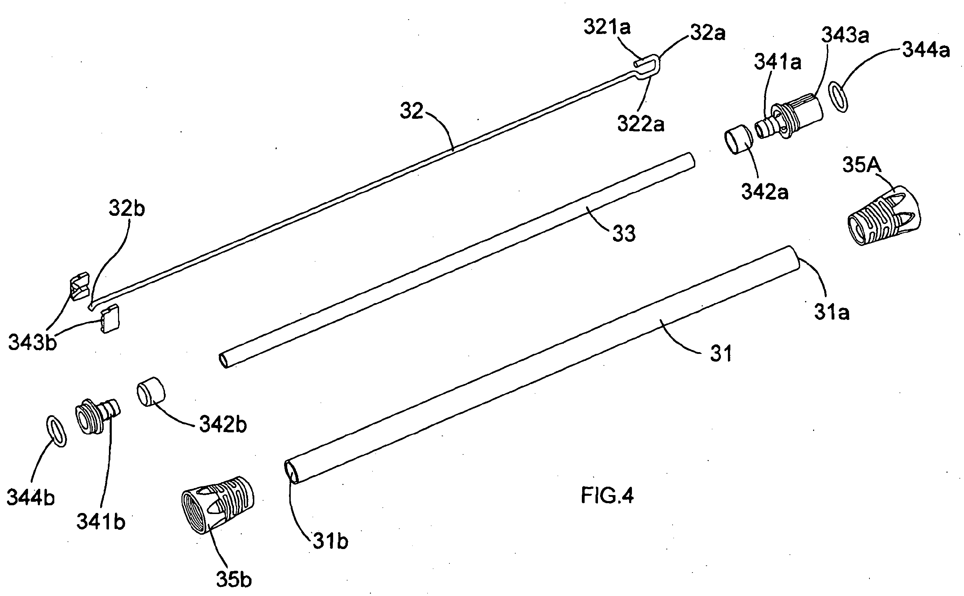

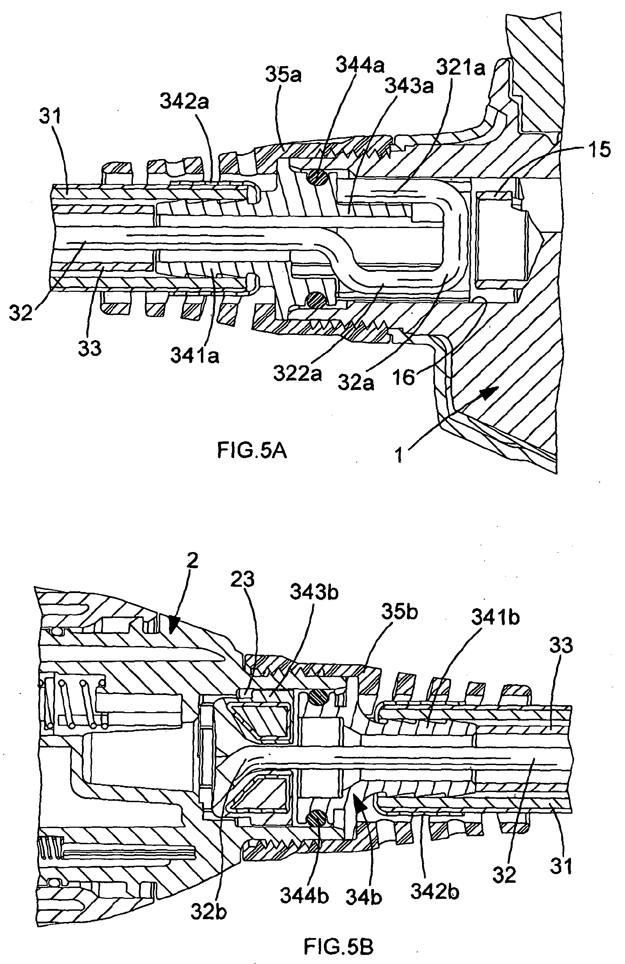

Figures 3 and 4 show the bendable bend retaining hose portion 3 in more detail. Figure 3 shows a section through the hose portion and Figure 4 shows an exploded view of the hose portion 3 so that the individual components can be more clearly seen. Figures 5A and 5B show the connections between the hose portion 3 and the head 2 and handle 1 in more detail.

The hose portion 3 comprises a length of hose 31 with the primary function of carrying water from the handle 1 to the head 2 and a plastically deformable wire portion 32 which runs within the hose 31 and acts as a holding member for holding the hose in a desired bent position and hence holding the head 2 in a desired position relative to the handle 1.

Running between the length of hose 31 and wire 32 is a spacer 33 which in the present embodiment is tubular and may for example be another length of hose. This spacer 33 occupies some of the volume within the hose 31 around the wire 32 and performs at least two functions in the present embodiment. First the spacer 33 tends to limit the minimum bend radius into which the hose portion 3 may be bent. This can have the benefits of reducing the chance of kinking of the hose, avoiding damage to the length of hose 31 due to overbending and also can help to limit damage to the wire 32 due to overbending. It will be appreciated that repeated bending can cause fatigue and the provision of the spacer 33 helps to reduce the risk of any failure in the product due to fatigue. The spacer 33 can also help to limit the volume of water in the hose portion 3 whilst allowing it to have a desirable overall outside diameter. Reducing the amount of water in the hose portion 3 reduces the weight of the lance which can help a user with operation of the device and can help to minimise the bending load on the wire 32 which it must resist.

Whilst the spacer 33 is a piece of hose in the present embodiment, in other embodiments the spacer 33 may be differently constructed. Thus, for example, it might have axial through holes provided in its side walls along its length and might not be of hose type material.

The wire 32 is mounted in the length of hose 31 via a pair of mounting portions 34a, 34b, a first of which is provided at a first end of the length of hose 31a and a second of which is provided at a second end of the hose 31b.

The first mounting portion 34a has a barbed hose engaging portion 341a which is located in the first end of the length of hose 31a. The hose is crimped to the hose engaging portion 341 a using a ferrule 342a. The first mounting portion 34a further has a wire engaging portion 343a with which a first end 32a of the wire is engaged.

The wire engaging portion 343a generally has the form of a hollow cylinder. This piece is moulded in one part with the corresponding hose engaging portion 341 a.

The first end of the wire 32 is bent in the shape of a hook and this hook is engaged with the engaging portion 343a. This holds the first end 32a of the wire 32 against rotation relative to the first mounting portion 34a and hence against rotation relative to the first end of the length of hose 31a. The wire engaging portion 343a of the mounting portion 34a has appropriate recesses receiving two axially extending parts 321a and 322a of the hook. These axially extending parts 321a and 322a are spaced from one another in a direction which is perpendicular to the axis of the wire 32 as a whole and similarly perpendicular to an axis of the length of hose 31. In the present embodiment these two portions 321a and 322a are also spaced from the axis of the wire 32 as a whole. This is not necessary in order to obtain the anti rotation function desired by helps improve this function/minimises the force which must be resisted in the recesses.

Also provided at this first end 31 a of the length of hose 31 is an o-ring 344a carried on the first mounting portion 34a and a threaded sleeve 35a. The threaded sleeve 35a is arranged to bear on the mounting portion 34a and to threadingly engage with a corresponding thread on the handle 1 to connect the first end of the bendable hose portion 3 to the handle 1. The o-ring 344a then seals on a corresponding surface in the handle 1. This connection between the bendable hose portion 3 and handle 1 can be seen most clearly in Figure 5A.

The handle portion 1 includes an abutment portion 15 which abuts against the end of the wire 32 in particular against the end of the hook when the hose portion 3 is fitted to the handle 1. This means that when the bendable hose portion 3 is connected with the handle portion 1, axial movement of the wire 32 towards the handle 1 which might tend to disengage the hook portion from the mounting portion 34a is resisted.

Overall this means that a mechanically secure anti rotation connection can be achieved between the wire 32 on the one hand and the mounting portion 34a and hence the length of hose 31 on the other hand without having to use any form of bond or weld. This in turn facilitates the use of differing materials for the holding portion/wire 32 and the mounting portion 34a.

In the present embodiment the wire is metallic, for example, of mild steel whereas the mounting portion 34a is of plastics material.

The structure provided at the other end of the bendable hose portion 3 has some similarities with that described above but also some differences.

The second mounting portion 34b is again secured in the length of hose 31 this time at a second end 31b. It comprises again a barbed hose engaging portion 341 b onto which the hose is secured by a corresponding ferrule 342b. Again a wire engaging portion 343b is provided for securing the second end 32b of the wire 32.

However the structure of the second mounting portion 34b is rather different. The hose engaging portion 341b is separate from the wire engaging portion 343b. This is to facilitate manufacture of the bendable hose portion 3. In the case of the second mounting portion 34b the wire engaging portion has two parts 343b which are sonic welded together around the second end of the wire 32b. The second end of the wire 32b has a simple bend and the two parts of the wire engaging portion 343b together form a cavity in which this simple bend is captured. Thus again there are two parts of the wire which are held in the wire engaging portion 343b with one being spaced from the other in a direction perpendicular to the axis of the wire 32/length of hose 31. Thus again rotation of the end of the wire 32 relative to the hose engaging portion 343b may be resisted.

To achieve the aim of resisting rotation of this end of the wire 32b relative to the length of hose 31 the resulting block 343b must be held against rotation relative to the length of hose. In the present embodiment this is achieved by virtue of the block being received in a suitable recess 23 provided in the head 2. The connection between this second end of the bendable hose portion 3 and the head 2 can be most clearly seen in Figure 5B. The recess 23 again is most clearly seen in Figure 5B.

As most clearly seen in Figure 5B the second wire engaging portion 343b and recess 23 are arranged such that the wire engaging portion 343b may move axially relative to the recess 23 and hence axially relative to the head 2 and length of hose 31. This allows for axial movement of the end of the wire 32 which will tend to occur as the bendable hose portion 3 is bent into different positions. This axial movement is due to the different bend radiuses which will be adopted by the wire 32 and the length of hose 31 as the whole hose portion 3 is bent.

Also provided at this second end of the bendable hose portion 3 is an o-ring 344b carried on the mounting portion 34b and a threaded sleeve 35b which is arranged to bear on the mounting member 34b and threadingly engaged with a corresponding thread on the head 2. The o-ring 344b then seals with a corresponding surface in the head 2.

In manufacturing of the bendable hose portion 3 the spacer 33 is first provided in the length of hose 31. Then the threaded sleeves 35a and 35b are put in position on the length of hose 31. After this the hose engaging portions 341 a and 341 b are inserted into the end of hose 31 and secured by their respective ferrules 342a, 342b. At this stage, or later, the o-rings 344a and 344b may be put into position. Then the wire 32 has the appropriate bends put in its first 32a and second 32b ends to form the hook at the first end 32a and the simple bend at the second end 32b. Then the wire 32 is fed through the first mounting portion 34a and along the length of hose 31 until the second end 32b of the wire reaches the second end. The hook at the first end 32a of the wire 32 is then engaged with the first mounting member 34a. After this the parts of the second wire engaging portion 343b are placed around the second end of the wire 32b and sonically welded into position. The bendable bend retaining hose portion 3 is then ready for connection to other components.

In the present embodiment, this is connection between the handle 1 and head 2.

However, in other cases, then as alluded to above, other parts might be introduced between the bendable bend retaining hose portion 3 and the handle 1 and/or head 2.

In the arrangement of the lance mentioned above, there can be a tendency for the mounting portion 34a provided at the first end of the length of hose 31 to rotate within and relative to the handle portion 1. Anti-rotation features may be provided to resist this. Similarly anti-rotation features may be provided to resist relative rotation between the other mounting portion 34b at the second end of the length of hose 31 and the head 2. More generally anti-rotation features may be provided to resist rotation between at least one mounting portion 34a, 34b and the respective adjacent outlet or inlet portion 2, 1. The anti-rotation features may comprise a series of projections on one part and a corresponding series of recesses on the other part.

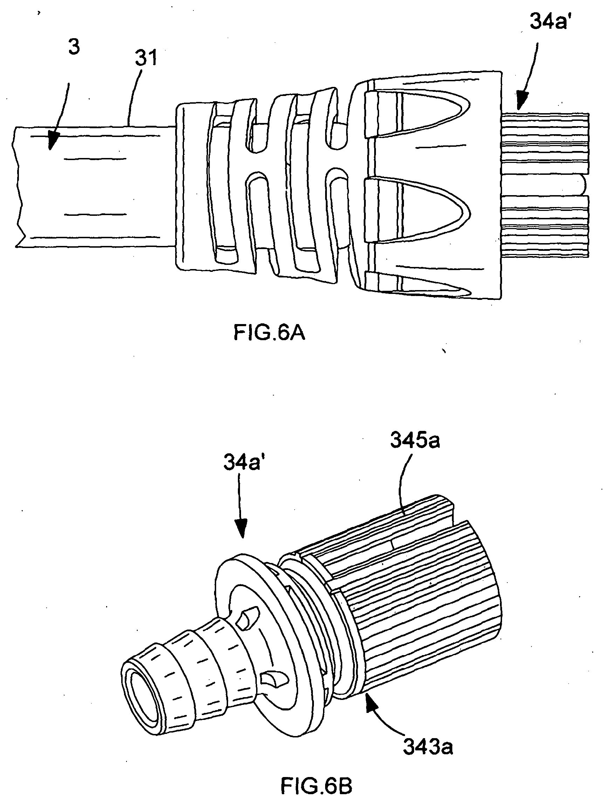

Figures 6A and 6B show a modified mounting portion 34a' including anti-rotation splines 345a. In this case these splines 345a are provided on an outside surface of the hollow cylindrical wire engaging portion 343a. Otherwise the mounting portion 34a' is the same as the one 34a described above in relation to Figures 1 to 5. These splines 345a will engage with a corresponding set of splines provided on a facing bore surface of the handle portion (not shown) when the mounting portion 34a' is located in the handle portion 1 as the whole bendable hose portion 3 is connected to the handle 1. The corresponding bore surface 16 (where the splines would be provided) of the handle 1 of the embodiment of Figures 1 to 5 can be seen in Figure 5A.

Whilst the above description has been in the terms of a watering lance it should be appreciated that the bendable bend retaining hose portion described above may be used in other garden water supplying products in particular other garden watering or garden pond equipment. Thus in general terms there will be an inlet portion such as the handle portion 1 but not limited to handle portions and an outlet portion such as the head 2 with the bendable bend retaining hose portion 3 provided therebetween. Of course as mentioned above, other components might be provided between these components.

Thus the bendable bend retaining hose portion 3 might be supplied as a component on its own or integrated into a larger product including the inlet portion and outlet portion. It is conceivable, for example, that the inlet portion might comprise a hose and the outlet portion might comprise a hose in each case with a suitable adaptor at the end for connecting to the bendable bend retaining hose portion. In the case of a bendable bend retaining hose portion 3 of the type described above, the adaptor (or other component) to which the first end of the hose portion 3 is connected should preferably have an abutment member for abutting against the end of the holding member/wire 32 as in the case of the lance handle 1 described above. Similarly the adaptor (or other component) for connecting to the second end of the hose portion 3 should preferably have a recess for controlling movement of the second wire engaging portion 343b as provided in the head 2 in the lance above. That is to say a recess which on the one hand restricts rotational movement of the wire engaging portion 343b relative to the adaptor and hence the length of hose 1 whilst allowing axial movement of the wire engaging portion 343b.

As a specific alternative example the outlet portion might be a hose gun in the place of the head 2 in the embodiment shown above and the inlet portion might be a hose provided with a suitable adaptor.

It has been found during testing of devices including second mounting portions 34b of the type shown above, for example in Figures 3 and 5B, that the sonic welded parts 343b can be forced apart with repeated use. The relatively high forces acting on the parts 343b due to the torque applied to the wire 32 in bending of the bendable hose portion 3 can cause the parts to splay apart.

It has also been found that the welding process can damage any anticorrosion coating on the deformable wire.

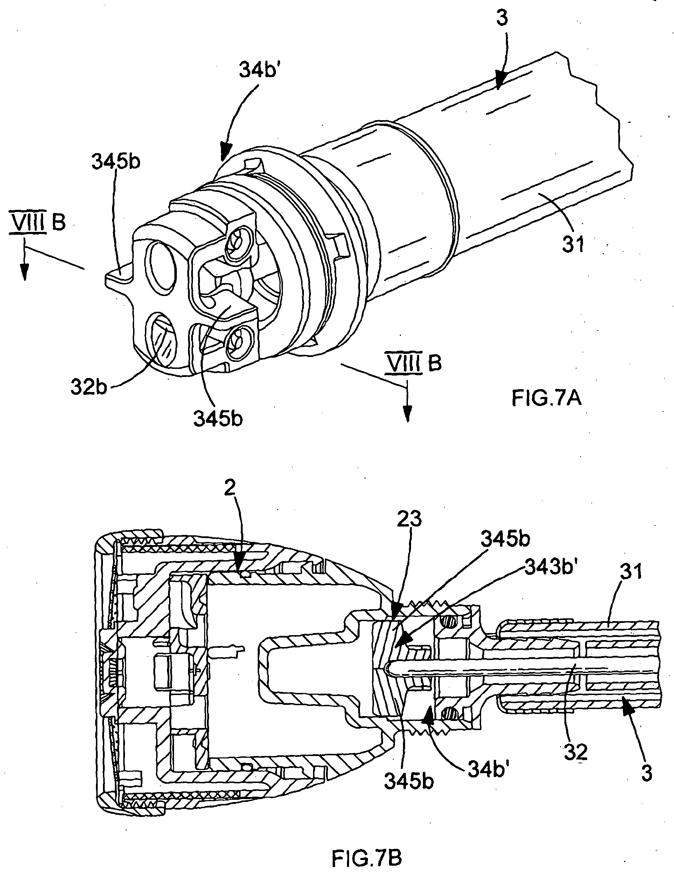

Figures 7A and 7B show a modified version of the second mounting portion 34b'. Figure 7A shows the modified second mounting portion 34b' mounted on the end of a bendable hose portion 3 but exposed whereas Figure 7B shows the modified second mounting portion received in a recess 23 of a head 2 as is the case for the initial second mounting portion 34b as shown in Figure 5B. Note however that the section shown in Figure 7B is taken at 90° to that shown in Figure 5B.

The modified second mounting portion 34b' still has two parts 343b' which form a wire engaging portion, are fixed around the end of the wire 32b and are received in the recess 23 to resist rotation of the wire engaging portion 343b' and hence end of the wire 32b.

However, the two parts 343b' of the second mounting portion 34b' are screwed together to give secure fixing and avoid the use of sonic welding. Further each of the two parts 343b' of mounting portion 34b' comprises a wing or projection 345b which is arranged to support the parts 343b' against splaying. Each projection 345b abuts against a control surface in the receiving part so that splaying of the parts 343b' is resisted. In the present embodiment the receiving part is of course the head 2 and the control surface is in the recess 23 of the head. However in other cases the control surface might be in another type of outlet portion or indeed in an inlet portion.

As a whole the modified second mounting portion 34b' has two block portions extending transversely away from the wire for acceptance in an anti-rotation recess and two anti-splaying projections extending transversely away from the wire and angularly displaced from the block portions. The wire engaging portion 343b' of the modified second mounting portion 34b' has a generally cross-shaped axial cross-section.

It will be noted that in each of the arrangement described and shown above the wire 32 extends beyond the length of hose 31. The ends of the wire 32 are received in their respective wire engaging portions 343a/343b/343b' beyond (or outside of) the length of hose 31. This allows achievement of good anti-rotation characteristics without adversely increasing the diameter of the length of hose 31.

## Claims

1. A bendable bend retaining garden water supplying hose portion having an inlet end and an outlet end and comprising a length of hose (31) and a plastically deformable holding member (32) running within the length of the hose (31), the hose portion being bendable to allow the outlet end to be moved relative to the inlet end and being arranged for holding its position when bent as desired, wherein
the holding member (32) is mounted to the length of hose (31), and
the hose portion comprises at least one holding member mounting portion (34a, 34b), which has a hose engaging portion (341 a) which engages with the length of hose and a holding member engaging portion (343a) which engages with the holding member (32) at a position beyond the length of hose, and the holding member has two portions (321a, 322a) which are located in the holding member engaging portion (343a) of the mounting portion and which are spaced from one another in a direction transverse to the axis of the hose in the region of the mounting member portion, for resisting rotation of the holding member relative to the mounting portion at the mounting portion.

2. A hose portion according to claim 1 in which the holding member (32) has at least one bend in the region of the mounting portion to create the two portions (321 a, 322a) which are located in the holding member engaging portion (343a) of the mounting portion (34a) to resist relative rotation of the holding member (32) relative to the mounting portion at the mounting portion.

3. A hose portion according to claim 1 or claim 2 in which the holding member (32) has a hook shaped portion at one end.

4. A hose portion according to any one of claims 1 to 3 in which the bendable bend retaining hose portion comprises a spacer member (33) provided between the plastically deformable holding member (32) and the length of hose (31).

5. A hose portion according to any preceding claim in which the mounting portion (34a, 34b) is such as to allow relative axial movement between the length of hose (31) and the holding member (32).

6. A hose portion according to any preceding claim in which the holding member (32) is mounted at each end to the length of hose (31).

7. A hose portion according to any preceding claim in which each end of the plastically deformable holding member (32) is mounted in the length of hose against rotation relative to the length of hose (31).

8. A hose portion according to any preceding claim in which there is a pair of holding member mounting portions (343a, 343b), a first of the mounting portions (343a) being arranged to be fed on one end of the holding member (32) and slid along the holding member (32) for engagement at the other end and a second of the mounting portions (343b) having at least two parts which are fixed together around the holding member (32).

9. A hose portion according to claim 8 in which the holding member engaging portion (343b) of one of the mounting portions (34b) is axially moveable relative to the hose engaging portion (341 b) of the mounting portion (34b) whilst held against rotation relative to the hose engaging portion (341 b).

10. A hose portion according to any preceding claim in which the, or one of the, holding member engaging portions comprises anti-splaying projections (345b) for acting on a control surface of a corresponding inlet or outlet portion into which the engaging portion is introduced.

11. Garden water supplying apparatus comprising an inlet portion (1) and an outlet portion (2) and connected therebetween a bendable bend retaining hose portion according to any preceding claim.

12. Garden water supplying apparatus according to claim 11 in which the hose portion has a pair of holding member engaging portions (343a, 343b) and the inlet portion (1), outlet portion (2) and pair of holding member engaging portions (343a, 343b) having corresponding anti-rotation features to resist rotation between the respective engaging portion and the respective one of the inlet and outlet portions.

13. Garden water supplying apparatus according to claim 11 or 12 wherein at least one of the inlet portion (1) and outlet portion (2) has an abutting portion (15) for abutting with a portion of the holding member to help keep the holding member engaged with a respective mounting portion.

14. Garden water supplying apparatus according to any one of claims 11 to 13 in which the outlet portion has a sprinkler outlet and the bendable bend retaining hose portion is bendable into a configuration which allows the apparatus to be used as a lawn sprinkler.

15. Garden water supplying apparatus according to any one of claims 11 to 14 wherein the garden water supply apparatus comprises a watering lance.

16. A method of making a bendable bend retaining hose portion according to claim 1, wherein the bendable bend retaining hose portion comprises a pair of holding member mounting portions (34a, 34b) each of which has a hose engaging portion (341 a, 341 b) which engages with the length of hose (31) and a holding member engaging portion (343a, 343b) with which the holding member (32) engages so that a first end of the holding member is engaged with a first of the mounting members and a second end of the holding member is engaged with a second of the mounting members, the method comprising the steps of:
engaging the hose engaging portion (341 a) of the first of the mounting portions with a first end of the length of hose;
engaging the hose engaging portion (341 b) of the second of the mounting portions with a second end of the length of hose;
feeding the second end of the holding member (32) through an aperture in the first of the mounting portions (34a) and into the length of hose;
continuing to feed the holding member (32) through the first of the mounting portions (34a) until locating the first end of the holding member in the first of the mounting portions as that end reaches the mounting portion;
feeding the second end of the holding member through an aperture in the hose engaging portion of a second of the mounting portions (34b);
wherein the holding member engaging portion (343b) of the second of the mounting portions (34b) has at least two parts and the method comprises fixing the two parts together around the second end of the holding member (32), after passing the second end of the holding member through the aperture in the hose engaging portion of the second of the mounting portions, to capture the second end of the holding member.

## Patentansprüche

1. Biegsamer biegungsbeibehaltender Wasserversorgungs-Schlauchabschnitt für einen Garten, der ein Einlassende und ein Auslassende aufweist und der ein Schlauchlängenstück (31) und ein plastisch verformbares Halteelement (32) aufweist, das innerhalb des Schlauchlängenstücks (31) verläuft, wobei der Schlauchabschnitt biegsam ist, um zu ermöglichen, dass das Auslassende relativ zum Einlassende bewegt wird, und er ausgebildet ist, um seine Position zu halten, wenn er wie gewünscht gebogen wurde, wobei
das Halteelement (32) an dem Schlauchlängenstück (31) befestigt ist, und der Schlauchabschnitt mindestens einen Halteelement-Befestigungsabschnitt (34a, 34b), der einen Schlaucheingreifabschnitt (341 a) aufweist, welcher mit dem Schlauchlängenstück in Eingriff kommt, und einen Halteelement-Eingreifabschnitt (343a) aufweist, welcher mit dem Halteelement (32) an einer Position jenseits des Schlauchlängenstücks in Eingriff kommt, und das Halteelement zwei Abschnitte (321 a, 322a) aufweist, die sich in dem Halteelement-Eingreifabschnitt (343a) des Befestigungsabschnittes befinden und die in einer Richtung quer zur Schlauchachse im Gebiet des Befestigungselementabschnittes voneinander beabstandet angeordnet sind, um einer Drehung des Halteelementes relativ zum Befestigungsabschnitt an dem Befestigungsabschnitt zu widerstehen.

2. Schlauchabschnitt nach Anspruch 1, wobei das Halteelement (32) mindestens eine Krümmung in dem Gebiet des Befestigungsabschnittes aufweist, um die zwei Abschnitte (321 a, 322a) zu erzeugen, die sich in dem Halteelement-Eingreifabschnitt (343a) des Befestigungsabschnittes (34a) befinden, um an dem Befestigungsabschnitt einer Relativdrehung des Halteelementes (32) relativ zum Befestigungsabschnitt zu widerstehen.

3. Schlauchabschnitt nach Anspruch 1 oder Anspruch 2, wobei das Halteelement (32) einen hakenförmigen Abschnitt an dem einen Ende aufweist.

4. Schlauchabschnitt nach einem der Ansprüche 1 bis 3, wobei der biegsame biegungsbeibehaltende Schlauchabschnitt ein Abstandhalterelement (33) aufweist, das zwischen dem plastisch verformbaren Halteelement (32) und dem Schlauchlängenstück (31) vorgesehen ist.

5. Schlauchabschnitt nach einem der vorhergehenden Ansprüche, wobei der Befestigungsabschnitt (34a, 34b) derart beschaffen ist, dass er eine axiale Relativbewegung zwischen dem Schlauchlängenstück (31) und dem Halteelement (32) ermöglicht.

6. Schlauchabschnitt nach einem der vorhergehenden Ansprüche, wobei das Halteelement (32) bei jedem Ende an dem Schlauchlängenstück (31) befestigt ist.

7. Schlauchabschnitt nach einem der vorhergehenden Ansprüche, wobei jedes Ende des plastisch verformbaren Halteelementes (32) in dem Schlauchlängenstück gegen eine Drehung relativ zum Schlauchlängenstück (31) befestigt ist.

8. Schlauchabschnitt nach einem der vorhergehenden Ansprüche, wobei es ein Paar von Halteelement-Befestigungsabschnitten (343a, 343b) gibt, wobei ein erster der Befestigungsabschnitte (343a) ausgebildet ist, um auf das eine Ende des Halteelementes (32) aufgeschoben zu werden und entlang dem Halteelement (32) gleitend verschoben zu werden, und zwar für ein In-Eingriff-Kommen an dem anderen Ende, und ein zweiter der Befestigungsabschnitte (343b) mindestens zwei Teile aufweist, die um das Halteelement (32) herum aneinander befestigt sind.

9. Schlauchabschnitt nach Anspruch 8, wobei der Halteelement-Eingreifabschnitt (343b) eines der Befestigungsabschnitte (34b) in axialer Richtung relativ zum Schlaucheingreifabschnitt (341 b) des Befestigungsabschnittes (34b) bewegt werden kann, während er dabei gegen eine Drehung relativ zum Schlaucheingreifabschnitt (341 b) gehalten wird.

10. Schlauchabschnitt nach einem der vorhergehenden Ansprüche, wobei die, oder einer der, Halteelement-Eingreifabschnitte Aufspreizverhinderungsvorsprünge (345b) aufweist, die auf eine Steuerfläche eines entsprechenden Einlass- oder Auslassabschnittes einwirken, in den der Eingreifabschnitt eingeführt wird.

11. Wasserversorgungsvorrichtung für einen Garten, die einen Einlassabschnitt (1) und einen Auslassabschnitt (2) und einen zwischen diesen angeschlossenen biegsamen biegungsbeibehaltenden Schlauchabschnitt nach einem der vorhergehenden Ansprüche aufweist.

12. Wasserversorgungsvorrichtung für einen Garten nach Anspruch 11, wobei der Schlauchabschnitt ein Paar von Halteelement-Eingreifabschnitten (343a, 343b) aufweist und der Einlassabschnitt (1), der Auslassabschnitt (2) und das Paar von Halteelement-Eingreifabschnitten (343a, 343b) entsprechende Drehungsverhinderungsmerkmale aufweisen, um eine Drehung zwischen dem jeweiligen Eingreifabschnitt und dem Einlass- bzw. dem Auslassabschnitt zu verhindern.

13. Wasserversorgungsvorrichtung für einen Garten nach Anspruch 11 oder 12, wobei der Einlassabschnitt (1) und/oder der Auslassabschnitt (2) einen Widerlagerabschnitt (15) aufweisen, der gegen einen Abschnitt des Halteelementes anstößt, um zu unterstützen, dass das Halteelement in Eingriff mit einem jeweiligen Befestigungsabschnitt bleibt.

14. Wasserversorgungsvorrichtung für einen Garten nach einem der Ansprüche 11 bis 13, wobei der Auslassabschnitt einen Beregnungsauslass aufweist und der biegsame biegungsbeibehaltende Schlauchabschnitt in eine Konfiguration gebogen werden kann, die ermöglicht, dass die Vorrichtung als Rasensprenger verwendet wird.

15. Wasserversorgungsvorrichtung für einen Garten nach einem der Ansprüche 11 bis 14, wobei die Wasserversorgungsvorrichtung für einen Garten eine Bewässerungslanze beinhaltet.

16. Verfahren zur Herstellung eines biegsamen biegungsbeibehaltenden Schlauchabschnittes nach Anspruch 1, wobei der biegsame biegungsbeibehaltende Schlauchabschnitt ein Paar von Halteelement-Befestigungsabschnitten (34a, 34b), von denen jeder einen Schlaucheingreifabschnitt (341 a, 341 b) aufweist, der mit dem Schlauchlängenstück (31) in Eingriff kommt, und einen Halteelement-Eingreifabschnitt (343a, 343b) aufweist, mit dem das Halteelement (32) in Eingriff kommt, so dass ein erstes Ende des Halteelementes mit einem ersten der Befestigungselemente in Eingriff kommt und ein zweites Ende des Halteelementes mit einem zweiten der Befestigungselemente in Eingriff kommt, wobei das Verfahren die Schritte beinhaltet:
In-Eingriff-Bringen des Schlaucheingreifabschnittes (341 a) des ersten der Befestigungsabschnitte mit einem ersten Ende des Schlauchlängenstücks;
In-Eingriff-Bringen des Schlaucheingreifabschnittes (341 b) des zweiten der Befestigungsabschnitte mit einem zweiten Ende des Schlauchlängenstücks;
Einschieben des zweiten Endes des Halteelementes (32) durch eine Öffnung in den ersten der Befestigungsabschnitte (34a) und in das Schlauchlängenstück;
fortgesetztes Einschieben des Halteelementes (32) durch den ersten der Befestigungsabschnitte (34a), bis sich das erste Ende des Halteelementes in dem ersten der Befestigungsabschnitte befindet, wenn dieses Ende den Befestigungsabschnitt erreicht;
Einschieben des zweiten Endes des Halteelementes durch eine Öffnung in den Schlaucheingreifabschnitt eines zweiten der Befestigungsabschnitte (34a);
wobei der Halteelement-Eingreifabschnitt (343b) des zweiten der Befestigungsabschnitte (34b) mindestens zwei Teile aufweist und das Verfahren beinhaltet, dass die beiden Teile um das zweite Ende des Halteelementes (32) herum aneinander befestigt werden, nachdem das zweite Ende des Halteelementes durch die Öffnung in den Schlaucheingreifabschnitt des zweiten der Befestigungsabschnitte hindurchgeführt wurde, um das zweite Ende des Halteelementes zu fassen.

## Revendications

1. Portion de tuyau flexible pour alimenter de l'eau destinée à l'arrosage de jardins, qui maintient un cintrage flexible, possédant une extrémité d'entrée et une extrémité de sortie et comprenant une longueur de tuyau flexible (31) et un élément de maintien (32) manifestant une aptitude à la déformation plastique, qui s'étend sur la longueur du tuyau flexible (31), la portion de tuyau flexible pouvant être cintrée pour permettre le déplacement de l'extrémité de sortie par rapport à l'extrémité d'entrée et étant prévue pour maintenir sa position à l'état cintré, comme on le souhaite, l'élément de maintien (32) étant monté sur la longueur du tuyau flexible (31) et la portion de tuyau flexible comprenant au moins une portion de montage de l'élément de maintien (34a, 34b), qui possède une portion de mise en contact avec le tuyau flexible (341a), qui entre en contact avec la longueur de tuyau flexible, et une portion de mise en contact avec l'élément de maintien (343a), qui entre en contact avec l'élément de maintien (32) à un endroit situé au-delà de la longueur de tuyau flexible, et l'élément de maintien possédant deux portions (321a, 322a) qui sont disposées dans la portion (343a) de mise en contact avec l'élément de maintien, de la portion de montage, et qui sont espacées l'une de l'autre dans une direction transversale par rapport à l'axe du tuyau flexible dans la zone correspondant à la portion d'élément de montage pour résister à la rotation de l'élément de maintien par rapport à la portion de montage à la portion de montage.

2. Portion de tuyau flexible selon la revendication 1, dans laquelle l'élément de maintien (32) possède au moins un cintrage dans la zone de la portion de montage pour créer les deux portions (321a, 322a) qui sont disposées dans la portion de mise en contact avec l'élément de maintien (343a), de la portion de montage (34a) pour résister à une rotation relative de l'élément de maintien (32) par rapport à la portion de montage à la portion de montage.

3. Portion de tuyau flexible selon la revendication 1 ou 2, dans laquelle l'élément de maintien (32) possède une portion en forme de crochet à une extrémité.

4. Portion de tuyau flexible selon l'une quelconque des revendications 1 à 3, dans laquelle la portion de tuyau flexible qui maintient un cintrage flexible comprend un élément d'écartement (33) qui est prévu entre l'élément de maintien (32) manifestant une aptitude à la déformation plastique et la longueur de tuyau flexible (31).

5. Portion de tuyau flexible selon l'une quelconque des revendications précédentes, dans laquelle la portion de montage (34a, 34b) est telle qu'elle permet un mouvement axial relatif entre la longueur de tuyau flexible (31) et l'élément de maintien (32).

6. Portion de tuyau flexible selon l'une quelconque des revendications précédentes, dans laquelle l'élément de maintien (32) est monté à chacune de ses extrémités à la longueur de tuyau flexible (31).

7. Portion de tuyau flexible selon l'une quelconque des revendications précédentes, dans laquelle chaque extrémité de l'élément de maintien (32) manifestant une aptitude à la déformation plastique est montée dans la longueur de tuyau flexible à l'encontre d'une rotation relative par rapport à la longueur de tuyau flexible (31).

8. Portion de tuyau flexible selon l'une quelconque des revendications précédentes, dans laquelle on prévoit une paire de portions de montage de l'élément de maintien (343a, 343b), une première portion de montage (343) étant arrangée pour venir se disposer sur une extrémité de l'élément de maintien (32) et pour glisser le long de l'élément de maintien (32) à des fins de mise en contact à l'autre extrémité et la deuxième portion de montage (343b) possédant au moins deux parties qui sont fixées l'une à l'autre autour de l'élément de maintien (32).

9. Portion de tuyau flexible selon la revendication 8, dans laquelle la portion de mise en contact avec l'élément de maintien (343b) d'une des portions de montage (34b) est mobile en direction axiale par rapport à la portion de mise en contact avec le tuyau flexible (341 b) de la portion de montage (34b), tout en étant maintenue en antirotation par rapport à la portion de mise en contact avec le tuyau flexible (341 b).

10. Portion de tuyau flexible selon l'une quelconque des revendications précédentes, dans laquelle les portions de mise en contact avec l'élément de maintien, ou une desdites portions, comprennent/comprend des saillies anti-évasement (345b) pour agir sur une surface de commande d'une portion d'entrée ou de sortie correspondante dans laquelle est introduite la portion de mise en contact.

11. Appareil d'alimentation d'eau pour l'arrosage de jardins, comprenant une portion d'entrée (1) et une portion de sortie (2) et, raccordée entre ces dernières, une portion de tuyau flexible qui maintient un cintrage flexible selon l'une quelconque des revendications précédentes.

12. Appareil d'alimentation d'eau pour l'arrosage de jardins selon la revendication 11, dans lequel la portion de tuyau flexible possède une paire de portions de mise en contact avec l'élément de maintien (343a, 343b). et la portion d'entrée (1), la portion de sortie (2) et la paire de portions de mise en contact avec l'élément de maintien (343a, 343b) possèdent des caractéristiques correspondantes d'antirotation pour résister à la rotation entre la portion respective de mise en contact et la portion d'entrée et de sortie respective.

13. Appareil d'alimentation d'eau pour l'arrosage de jardins selon la revendication 11 ou 12, dans lequel au moins une portion choisie parmi la portion d'entrée (1) et la portion de sortie (2) possède une portion de butée (15) pour la mise en about avec une portion d'élément de maintien pour faciliter le maintien de la mise en contact de l'élément de maintien avec une portion de montage respective.

14. Appareil d'alimentation d'eau pour l'arrosage de jardins selon l'une quelconque des revendications 11 à 13, dans lequel la portion de sortie possède une sortie faisant office de gicleur et la portion de tuyau flexible qui maintient un cintrage flexible peut fléchir pour prendre une configuration qui permet d'utiliser l'appareil à titre d'arroseuse des gazons.

15. Appareil d'alimentation d'eau pour l'arrosage de jardins selon l'une quelconque des revendications 11 à 14, dans lequel l'appareil d'alimentation d'eau pour l'arrosage de jardins comprend une lance d'arrosage.

16. Procédé de fabrication d'une portion de tuyau flexible qui maintient un cintrage flexible selon la revendication 1, dans lequel la portion de tuyau flexible qui maintient un cintrage flexible comprend une paire de portions de montage de l'élément de maintien (34a, 34b), chacune possédant une portion de mise en contact avec le tuyau flexible (341a, 341b) qui entre en contact avec la longueur de tuyau flexible (31) et une portion de mise en contact avec l'élément de maintien (343a, 343b) avec laquelle on obtient une mise en contact avec l'élément de maintien (32) d'une manière telle qu'une première extrémité de l'élément de maintien entre en contact avec un premier élément de montage et une deuxième extrémité de l'élément de maintien entre en contact avec un deuxième élément de montage, le procédé comprenant les étapes dans lesquelles:
on met la portion de mise en contact avec le tuyau flexible (341a) de la première portion de montage en contact avec une première extrémité de la longueur de tuyau flexible;
on met la portion de mise en contact avec le tuyau flexible (341b) de la deuxième portion de montage en contact avec une deuxième extrémité de la longueur de tuyau flexible;
on introduit la deuxième extrémité de l'élément de maintien (32) à travers un orifice pratiqué dans la première portion de montage (34a) et dans la longueur de tuyau flexible;
on poursuit l'introduction de l'élément de maintien (32) à travers la première portion de montage (34a) jusqu'à ce que la première extrémité de l'élément de maintien vienne se disposer dans la première portion de montage lorsque cette extrémité atteint la portion de montagne ;
on introduit la deuxième extrémité de l'élément de maintien à travers un orifice pratiqué dans la portion de mise en contact avec le tuyau flexible, de la deuxième portion de montage (34b) ;
la portion de mise en contact avec l'élément de maintien (343b) de la deuxième portion de montage (34b) possédant au moins deux parties, et le procédé comprenant le fait de fixer les deux parties l'une à l'autre autour de la deuxième extrémité de l'élément de maintien (32), après avoir fait passer la deuxième extrémité de l'élément de maintien à travers l'orifice pratiqué dans la portion de mise en contact avec le tuyau flexible, de la deuxième portion de montage, pour saisir la deuxième extrémité de l'élément de maintien.
